# EUROPÄISCHE PATENTSCHRIFT

(11) **EP 2 523 319 B1**
(45) Veröffentlichungstag und Bekanntmachung des Hinweises auf die Patenterteilung: **18.12.2013**
(21) Anmeldenummer: 11166056.9
(22) Anmeldetag: 13.05.2011
(51) Int. Cl.: H02K 16/00, H02K 41/03, H02K 3/28

(54) **Zylindrischer Linearmotor mit geringen Rastkräften**
Cylindrical linear motor with low cogging forces
Moteur linéaire cylindrique à faible pulsation de couple

(43) Veröffentlichungstag der Anmeldung: 14.11.2012
(73) Patentinhaber: Siemens Aktiengesellschaft, 80333 München (DE)
(72) Erfinder: Fick, Michael, 97656 Sondernau (DE); Stäblein, Armin, 97650 Fladungen (DE); Vollmer, Rolf, 36129 Gersfeld (DE)

(56) Entgegenhaltungen:
- DE-A1-102005 020 504
- JP-A- 2006 223 090

## Beschreibung

Die vorliegende Erfindung betrifft einen zylindrischen Linearmotor mit einem zylindrischen Läufer, der acht Pole aufweist, und einem zylindrischen Ständer, der eine Wicklung mit 36 koaxialen, in Umfangsrichtung verlaufenden Spulen aufweist.

Linearmotoren können in zylindrischer Bauweise ausgeführt sein. Der Ständerkern ist dabei hohlzylindrisch ausgebildet und weist an seiner Innenseite in Umfangsrichtung verlaufende Nuten auf. In diese Nuten sind Ringspulen eingelegt. Der Ständerkern ist üblicherweise aus einem massiven, weichmagnetischen Material hergestellt.

Die Läufer der Linearmotoren sind in der Regel mit Permanentmagneten an ihrer Oberfläche ausgestattet. Die Ständer der Linearmotoren bilden die magnetischen Pole in axialer Richtung dynamisch aus. Je nach axialer Stellung ziehen sich dann der Läufer und der Ständer mit unterschiedlichen Kräften an. Daraus resultieren zum Teil hohe Rastkräfte, die bei Linearmotoren unerwünscht sind.

Dem Fachmann ist aus DE 10 2005 020 504 A1 ein zylindrischer Linearmotor bekannt, wobei ein zylindrischer Läufer acht Pole aufweist, und ein zylindrischer Ständer eine Wicklung mit koaxialen, in Umfangsrichtung verlaufenden Ringspulen aufweist, wobei die Ringspulen gleich groß und axial hintereinander angeordnet sind, und wobei erste Anschlüsse jeweils mit einer Phase eines Dreiphasensystems verbunden sind.

Kombinationsantriebe werden für Antriebsaufgaben eingesetzt, die eine drehende und lineare Bewegung benötigen. Dabei ist es vorteilhaft, wenn diese Bewegungen unabhängig voneinander in Winkel und Weg frei eingestellt werden können. Hinzu kommt häufig die weitere Anforderung, dass die Bewegungen hochdynamisch erfolgen sollen.

Die Aufgabe der vorliegenden Erfindung besteht darin, einen zylindrischen Linearmotor bereitzustellen, der möglichst geringe Rastkräfte aufweist.

Erfindungsgemäß wird diese Aufgabe gelöst durch einen zylindrischen Linearmotor mit
- einem zylindrischen Läufer, der acht Pole aufweist, und
- einem zylindrischen Ständer, der eine Wicklung mit 36 koaxialen, in Umfangsrichtung verlaufenden Ringspulen aufweist, wobei
- die Ringspulen gleich groß sind und axial hintereinander angeordnet sind,
- sämtliche Anschlüsse der Ringspulen in einem axial verlaufenden Schaltkanal angeordnet sind,
- jede Ringspule bei vorgegebener Draufsicht auf den Schaltkanal je einen linken Anschluss und je einen rechten Anschluss besitzt, so dass sich für die 36 Ringspulen die linken Anschlüsse A1L bis A36L und die rechten Anschlüsse A1R bis A36R ergeben,
- die Anschlüsse paarweise wie folgt verbunden sind:
   A1L mit A6R
   A4L mit A9R
   A7L mit A12R
   A10L mit A15R
   A13L mit A18R
   A16L mit A21R
   A19L mit A24R
   A22L mit A27R
   A25L mit A30R
   A28L mit A33R
   A31L mit A36R

   A3L mit A5L
   A6L mit A8L
   A9L mit A11L
   A12L mit A14L
   A15L mit A17L
   A18L mit A20L
   A21L mit A23L
   A24L mit A26L
   A27L mit A29L
   A30L mit A32L
   A33L mit A35L

   A2R mit A4R
   A5R mit A7R
   A8R mit A10R
   A11R mit A13R
   A14R mit A16R
   A17R mit A19R
   A20R mit A22R
   A23R mit A25R
   A26R mit A28R
   A29R mit A31R
   A32R mit A34R
- darüber hinaus sind die Anschlüsse A2L, A1R und A3R jeweils mit einer Phase eines Dreiphasensystems verbunden, und
- die Anschlüsse A34L, A36L und A35R sind zu einem Sternpunkt zusammengeschaltet.

In vorteilhafter Weise sind die drei Phasen eines Dreiphasensystems so an die Ringspulen des Ständers gelegt, dass sich für den Läufer mit den acht Polen und den Ständer mit den 36 Ringspulen nur äußerst geringe Rastkräfte ergeben. Dies wird insbesondere dadurch erreicht, dass nach dem obigen Schema die einzelnen Spulen in der jeweiligen Richtung mit den verschiedenen Phasen bestromt werden.

Optional kann der Ständer in der Mitte um eine Anzahl an zusätzlichen Ringspulen verlängert sein, die achtzehn oder ein Vielfaches davon beträgt, wobei die Anschlüsse der zusätzlichen Ringspulen nach dem gleichen Schema verbunden sind wie im Mittelteil des nicht verlängerten Ständers. Der Linearmotor kann also jeweils um eine Urwicklung verlängert werden, die hier achtzehn Ringspulen umfasst.

In vorteilhafter Ausführung wird durch eine Blechung des Ständerkerns erreicht, dass die Wirbelströme im Ständerkern bzw. Ständereisen reduziert und damit auch die Verluste minimiert werden. Außerdem kommt es so umso weniger zu einer Feldverdrängung, sodass ein rascherer Kraftaufbau möglich ist.

In einer speziellen Ausführungsform kann der Ständer einen weichmagnetischen Ständerkern besitzen, der in Umfangsrichtung verlaufende Nuten aufweist, in die die Ringspulen eingelegt sind. Damit sind die Ringspulen fixiert und das jeweilige Magnetfeld wird in den Luftspalt zwischen Läufer und Ständer geführt.

Darüber hinaus können die Einzelbleche des Ständerkerns eine Blechanordnung bilden, die in tangentialer Richtung bzw. Umfangsrichtung eine oder mehrere Unterbrechungen aufweist, in die jeweils ein Ständerkammelement eingefügt ist. In diesem Ständerkammelement können die Anschlüsse der Wicklungen nach außen geführt und verbunden werden.

Darüber hinaus kann das Ständerkammelement einen axial verlaufenden Kanal aufweisen, in dem eine Schaltung der Ringspulen angeordnet ist. Somit kann das Kammelement auch dazu genutzt werden, Schaltelemente für die Schaltung bzw. Verbindung der Wicklungen unterzubringen und zu fixieren.

Darüber hinaus ist es vorteilhaft, wenn das Ständerkammelement ein elektrisch isolierendes Kunststoffteil, ein elektrisch isoliertes Gussteil oder ein elektrisch isoliertes Sinterteil aufweist. Derartige Materialien können gewährleisten, dass die Schaltung der Wicklungen gefahrlos am Ständer untergebracht werden kann.

Weiterhin ist es vorteilhaft, wenn die Verbindungen der Anschlüsse mittels Schneidklemmen oder Lötungen hergestellt sind. Derartige Verbindungen erweisen sich als stabil und sind rasch herstellbar.

In einer besonders bevorzugten Anwendung wird der oben geschilderte zylindrische Linearmotor für einen Kombinationsantrieb verwendet. Damit können die Vorteile der geringen Rastkräfte auch für Antriebe genutzt werden, die Dreh- und Hubbewegungen ausführen können.

Die vorliegende Erfindung wird nun anhand der beigefügten Zeichnungen erläutert, in denen zeigen:
- FIG 1: einen Querschnitt durch einen Teil eines zylindrischen Linearmotors gemäß der vorliegenden Erfindung;
- FIG 2: ein Ständerblech des zylindrischen Linearmotors von FIG 1;
- FIG 3: eine Schrägansicht eines Ständers eines erfindungsgemäßen zylindrischen Linearmotors;
- FIG 4: ein Ständerkammelement;
- FIG 5: eine Stirnseitenansicht eines Teils des Ständers von FIG 3 im Bereich des Ständerkammelements und
- FIG 6: eine Draufsicht auf einen Schaltkanal eines Ständers eines erfindungsgemäßen zylindrischen Linearmotors.

Die nachfolgend näher geschilderten Ausführungsbeispiele stellen bevorzugte Ausführungsformen der vorliegenden Erfindung dar.

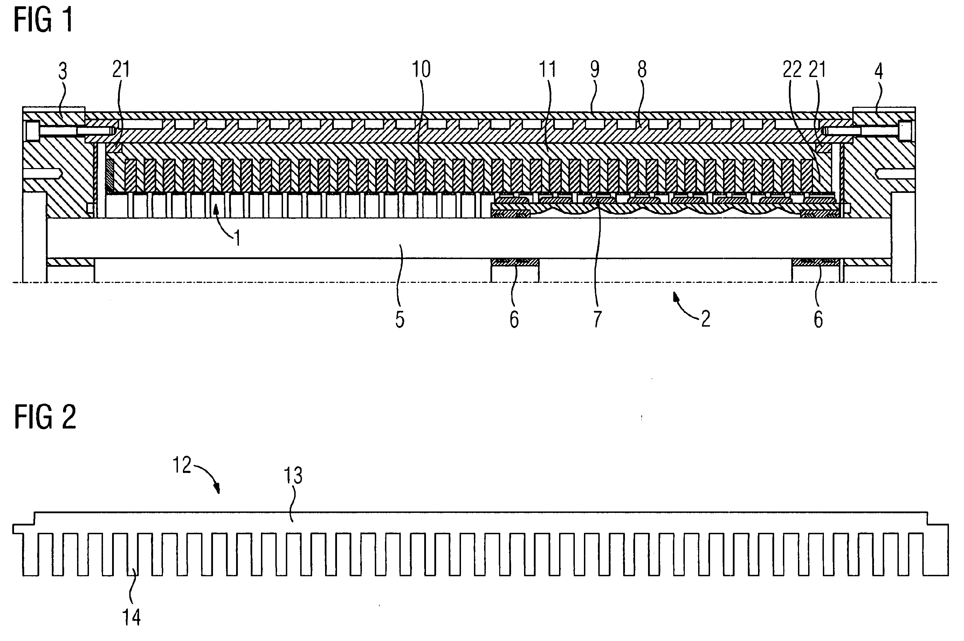

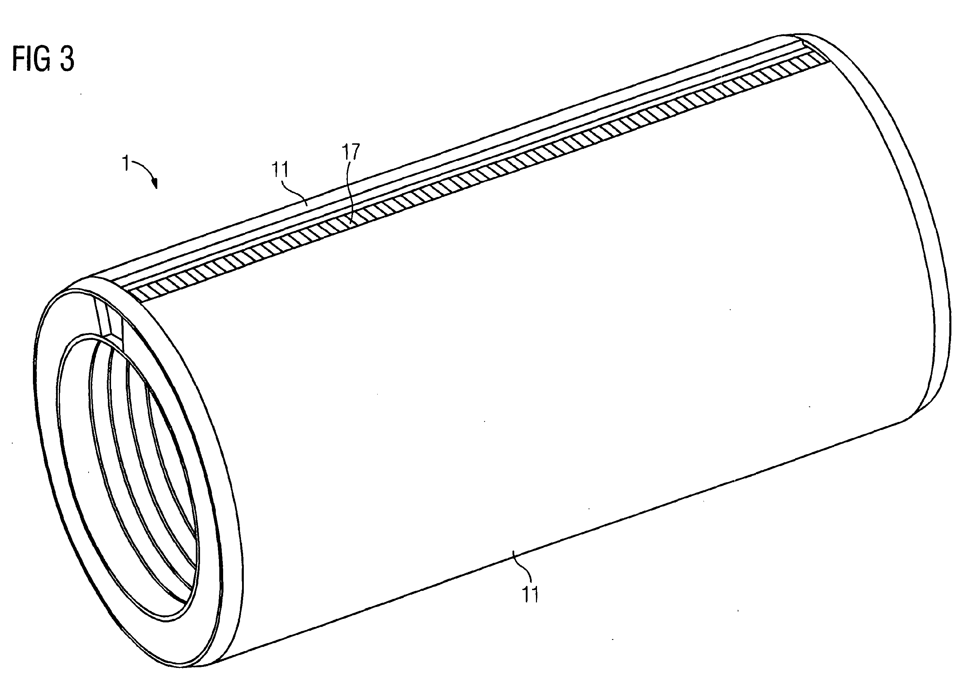

FIG 1 stellt einen Querschnitt durch einen Teil eines zylindrischen Linearmotors dar, dessen Ständer 1 ebenfalls zylinderförmig ausgestaltet ist und in FIG 3 perspektivisch wiedergegeben ist. In dem zylindrischen Ständer 1 befindet sich koaxial ein ebenfalls zylindrischer Läufer 2. Lagerschilde 3, 4 befinden sich an den Stirnseiten des Ständers 1. In den Lagerschilden 3, 4 ist parallel zu der Achse des zylindrischen Linearmotors eine Führungsstange 5 für den Läufer 2 befestigt. Eine oder mehrere weitere derartige Führungsstangen 5 sind in den Lagerschilden 3, 4 zur Führung des Läufers 2 fixiert. Mit Führungsbuchsen 6 ist der Läufer 2 linear auf der bzw. den Führungsstangen 5 gelagert. An seiner Außenfläche befinden sich in axialer Richtung und in Umfangsrichtung verteilt mehrere Permanentmagnete 7.

Der Ständer 1 ist außen von einem Kühlmantel 8 umgeben. Dieser Kühlmantel 8 bildet zusammen mit einem Gehäuse 9, das wiederum den gerippten Kühlmantel 8 umgibt, zahlreiche Kühlkanäle, in denen beispielsweise Wasser zur Kühlung des Linearmotors fließt. Die Lagerschilde 3, 4 sind an dem Kühlmantel 8 bzw. dem Gehäuse 9 befestigt, beispielsweise angeschraubt.

Der Ständer 1 besitzt zahlreiche Ringspulen 10, die jeweils in Umfangsrichtung des zylindrischen Ständers 1 verlaufen. Sie sind in entsprechende Nuten des Ständerkerns 11 eingelegt. Die Nuten verlaufen ebenfalls in Umfangsrichtung. Der Ständerkern ist üblicherweise aus einem ferromagnetischen Material gebildet und konzentriert den magnetischen Fluss der Ringspulen 10.

Optional ist der Ständerkern 11 geblecht. Er weist zahlreiche Einzelbleche 12 auf, die gemäß FIG 2 eine kammförmige Struktur besitzen. Jedes der Einzelbleche 12 erstreckt sich in axialer Richtung des zylindrischen Linearmotors. Ein Einzelblech 12 besitzt die axiale Länge des Ständerkerns, oder es sind mehrere Einzelbleche 12 hintereinander angeordnet. In Umfangsrichtung des zylindrischen Ständers 1 sind die Einzelbleche 12 sternförmig bzw. radial angeordnet. Damit ergibt sich eine zylinderförmige Blechanordnung bzw. ein zylinderförmiges Blechpaket.

Jedes Einzelblech 12 besitzt ein axial verlaufendes Joch 13, von dem senkrecht zahlreiche Zähne 14 abstehen. Im montierten Zustand weisen die Zähne 14 radial nach innen und bilden die Wände der Nuten für die Ringspulen 10.

Dadurch dass der Ständerkern 11 geblecht ausgeführt ist, können sich in ihm auch bei höheren Verfahrgeschwindigkeiten nur in einem sehr geringen Maße Wirbelströme ausbilden. Die elektrischen Verluste sind entsprechend reduziert. Außerdem erfährt der kraftbildende Feldaufbau durch die Blechung des Ständers 1 eine geringere Verzögerung. Damit kann eine erhöhte Dynamik des zylindrischen Linearmotors erreicht werden. Der Ständer 1 weist hier eine Anzahl von achtzehn Ringspulen auf. Damit kann der Ständer 1 für ein dreiphasiges Wicklungssystem genutzt werden. Die Spulen des Wicklungssystems sind durch den Blechkamm, d. h. den Ständerkern 11 mit den Nuten, beabstandet und axial positioniert. Die Anzahl der Zähne des Blechkamms orientiert sich an der Anzahl der Spulen. Ein Einzelblech 12 besteht dementsprechend aus mindestens einem Zahnbereich mit den Zähnen 14 und einem Jochbereich 13.

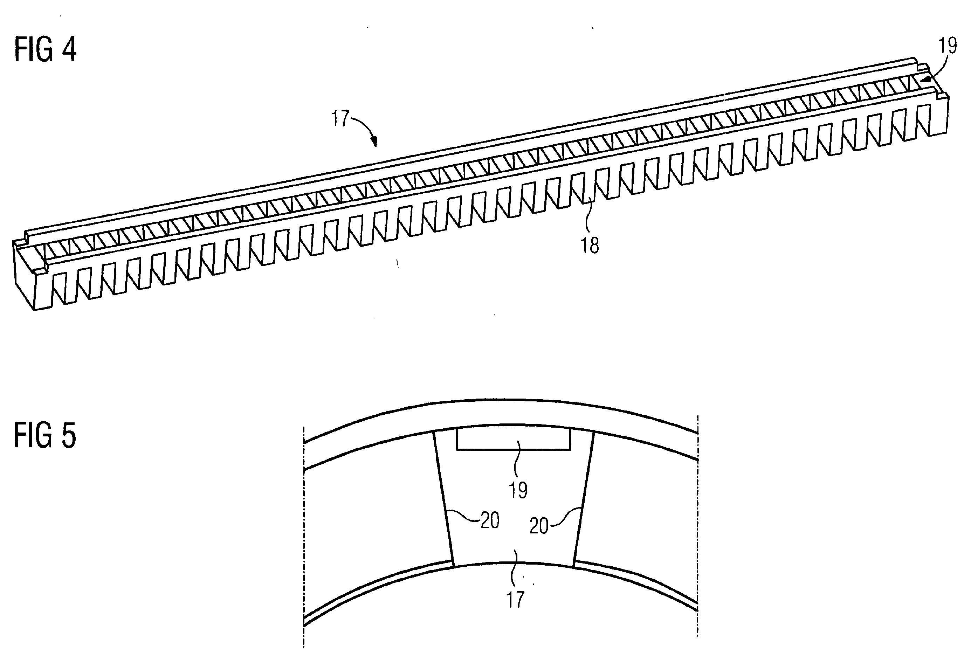

FIG 3 zeigt einen zylindrischen Ständer 1 eines erfindungsgemäßen Linearmotors. Der Ständerkern 11 ist durch die geschilderte Blechanordnung mit den sternförmig angeordneten Einzelblechen 12 gebildet. Die Blechanordnung bzw. der Ständerkern 11 ist in Umfangsrichtung durch ein Ständerkammelement 17 unterbrochen. Dieses Ständerkammelement 17 ist in FIG 4 einzeln dargestellt. Es besitzt (bezogen auf den in den zylindrischen Ständerkern 11 eingesetzten Zustand) eine radiale Höhe, die derjenigen des Ständerkerns 11 entspricht. Die axiale Länge des Ständerkammelements 17 entspricht hier derjenigen eines Einzelblechs 12. Die Länge des Kammelements kann aber auch der Länge mehrerer Einzelbleche 12 entsprechen, oder umgekehrt. Die Struktur des Ständerkammelements 17 an der Innenseite (wieder bezogen auf den in den zylindrischen Ständerkern 11 eingesetzten Zustand) entspricht im Wesentlichen derjenigen eines gleichgroßen Sektors des Ständerkerns 11 bzw. der Blechanordnung. Dies bedeutet, dass das Ständerkammelement 17 geometrisch gleich geformte Zähne 18 besitzt wie die Blechanordnung. Dementsprechend sind die Nuten der Blechanordnung durch das eingesetzte Ständerkammelement 17 nicht unterbrochen.

An seiner Außenseite besitzt das Ständerkammelement 17 einen Kanal 19, der unter den Außenmantel des zylindrischen Ständers 1 reicht. In diesen Kanal 19 können die Verbindungen zwischen den einzelnen Spulen hergestellt werden. Auf diese Weise können die Ringspulen 10 in axialer Richtung miteinander verbunden bzw. geschaltet werden, ohne dass die radiale Dimension des Ständers 1 vergrößert werden müsste.

Am Umfang des Ständers 1 kann ein derartiges Ständerkammelement 17 oder mehrere derartige Ständerkammelemente 17 angeordnet sein, die den Ständerkern bzw. die Blechanordnung in Umfangsrichtung einfach oder mehrfach unterbrechen. Das bzw. die Ständerkammelemente 17 können nicht nur für die Schaltung der Ringspulen 10, sondern generell für die Ausleitung der Windungsanschlüsse genutzt werden.

In der Stirnseitenansicht von FIG 5 ist zu erkennen, dass ein Ständerkammelement 17 vorzugsweise ringsektorförmige Gestalt besitzt. Die Seitenflächen 20 sind entsprechend radial ausgerichtet. Sie dienen damit gleichzeitig zur Anlage der benachbarten Bleche.

Als Material für die Ständerkammelemente 17 wird bevorzugt isolierender Kunststoff verwendet. Ständerkammelemente 17 können aber auch Guss- oder Sinterteile sein. In diesem Fall besitzen sie dann an der Oberfläche eine elektrische Isolierschicht.

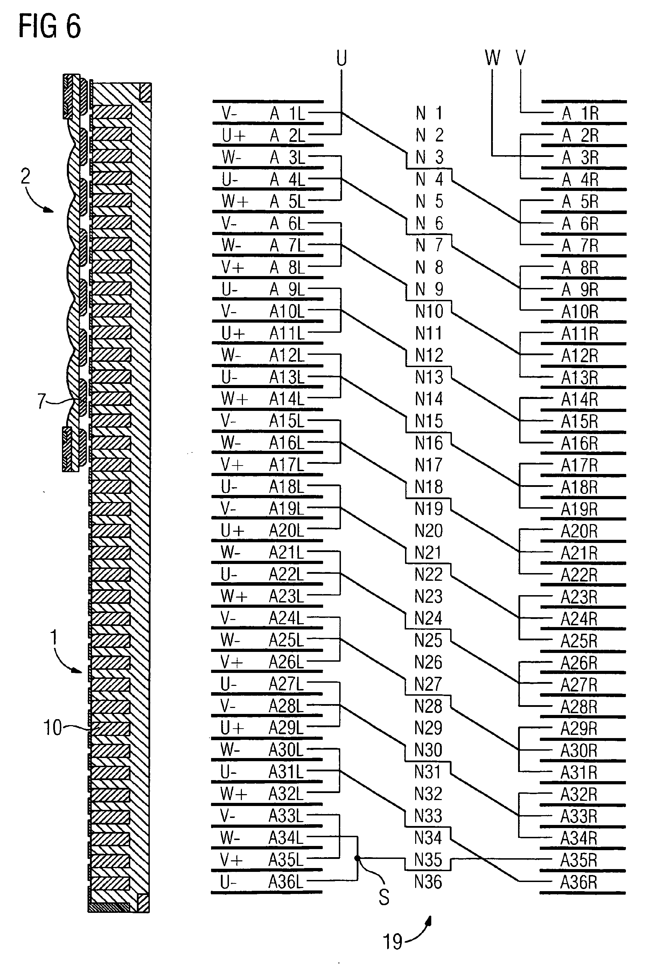

Die Verbindungen zwischen den einzelnen Spulen werden bevorzugt durch eine vorkonfektionierte Schaltleiste erzeugt, die im Schaltkanal 19 positioniert wird. Die Schaltung der Ringspulen 10 wird so ausgelegt, dass sich möglichst geringe Rastkräfte ergeben. Der Läufer 2 besitzt gemäß FIG 6 acht Pole und der Ständer 1 sechsunddreißig Ringspulen 10. Daraus ergibt sich eine Urwicklung mit Ringspulen 10, und der Ständer 1 besitzt die Länge eines ganzzahligen Vielfachen der Urwicklung. Im vorliegenden Beispiel besitzt die Urwicklung die Länge des Läufers 2, und der Ständer 1 ist doppelt so lang wie der Läufer 2.

Wie aus FIG 6 zu entnehmen ist, ragen in den Schaltkanal 19 linke Anschlüsse A1L bis A36L und rechte Anschlüsse A1R bis A36R. Sie stammen von den 36 Ringspulen 10, die in die Nuten N1 bis N36 eingelegt sind. Beispielsweise besitzt die Spule in der ersten Nut N1 die zwei gegenüberliegenden Anschlüsse A1L und A1R. Die Phase V des Dreiphasensystems ist an den Anschluss A1R angeschlossen. Damit fließt der Strom in den Anschluss A1R, durch die Spule hindurch und tritt am Ende der Spule am Anschluss A1L aus. Der Stromfluss von dem rechten Anschluss A1R zu dem linken Anschluss A1L wird hier mit einem negativen Vorzeichen symbolisiert (V-). Es resultiert daraus eine entsprechend gerichtete magnetische Komponente.

Der linke Anschluss A1L der ersten Ringspule ist mit dem rechten Anschluss A6R der sechsten Ringspule verbunden. Der Strom fließt dann weiter durch die sechste Spule und am Ende dieser Spule aus deren Ausgang am Anschluss A6L. Dieser Anschluss ist mit dem Anschluss A8L verbunden, so dass der Strom weiter in den linken Anschluss der achten Spule fließt. Nach Durchströmen der achten Spule tritt der Strom am Anschluss A8R aus. Nachdem der Strom hier vom linken Anschluss A8L zum rechten Anschluss A8R fließt, erhält er hier ein positives Vorzeichen (V+).

Die weiteren Verbindungen der Anschlüsse sind ohne weiteres FIG 6 zu entnehmen. Sie sind aber auch im Patentanspruch 1 angegeben.

In dem Beispiel von FIG 6 ist der Anschluss A2L mit der Phase U verbunden und der Anschluss A3R mit der Phase W.

Am unteren Ende von FIG 6 ist zu erkennen, dass die Spulen in den Nuten N34 bis N36 zu einem Sternpunkt S verbunden sind. Speziell sind die Anschlüsse A34L, A36L und A35R an dem Sternpunkt S verbunden.

Auf der linken Seite von FIG 6 ist die Kammstruktur des Ständers 1 mit den Ringspulen 10 zu erkennen. Der Läufer 2 erstreckt sich über die halbe Länge des Ständers 1. Der maximale Hub des Linearmotors entspricht also der Länge des Läufers 2. Wie oben angedeutet wurde, kann der Hub um ein Mehrfaches der Urwicklung bzw. der Läuferlänge vergrößert werden. Soll der Hub beispielsweise um eine Läuferlänge vergrößert werden, so sind zusätzlich am Ständer 1 achtzehn Ringspulen 10 vorzusehen. Es werden dann die Spulen in den Nuten ab der Nut N34 bis zur Nut N51 nach dem gleichen Schema verbunden wie eine entsprechende Anzahl von Spulen im Bereich der Nuten N4 bis N33. Der Sternpunkt wird dann von den Spulen in den Nuten N52, N53 und N54 gebildet. In ähnlicher Weise kann der Linearmotor auch um ein zweifaches, dreifaches usw. der Urwicklung verlängert werden.

## Patentansprüche

1. Zylindrischer Linearmotor mit
- einem zylindrischen Läufer (2), der acht Pole aufweist, und
- einem zylindrischen Ständer (1), der eine Wicklung mit 36 koaxialen, in Umfangsrichtung verlaufenden Ringspulen (10) aufweist, wobei
- die Ringspulen (10) gleich groß sind und axial hintereinander angeordnet sind,
- sämtliche Anschlüsse (A1L bis A36L, A1R bis A36R) der Ringspulen (10) in einem axial verlaufenden Schaltkanal (19) angeordnet sind,
- jede Ringspule (10) bei vorgegebener Draufsicht auf den Schaltkanal (19) je einen linken Anschluss (A1L bis A36L) und je einen rechten Anschluss (A1R bis A36R) besitzt, so dass sich für die 36 Ringspulen (10) die linken Anschlüsse A1L bis A36L und die rechten Anschlüsse A1R bis A36R ergeben,
- die Anschlüsse paarweise wie folgt verbunden sind:
A1L mit A6R
A4L mit A9R
A7L mit A12R
A10L mit A15R
A13L mit A18R
A16L mit A21R
A19L mit A24R
A22L mit A27R
A25L mit A30R
A28L mit A33R
A31L mit A36R
A3L mit A5L
A6L mit A8L
A9L mit A11L
A12L mit A14L
A15L mit A17L
A18L mit A20L
A21L mit A23L
A24L mit A26L
A27L mit A29L
A30L mit A32L
A33L mit A35L
A2R mit A4R
A5R mit A7R
A8R mit A10R
A11R mit A13R
A14R mit A16R
A17R mit A19R
A20R mit A22R
A23R mit A25R
A26R mit A28R
A29R mit A31R
A32R mit A34R
- darüber hinaus sind die Anschlüsse A2L, A1R und A3R jeweils mit einer Phase eines Dreiphasensystems verbunden, und
- die Anschlüsse A34L, A36L und A35R sind zu einem Sternpunkt zusammengeschaltet.

2. Zylindrischer Linearmotor nach Anspruch 1, wobei der Ständer (1) in der Mitte um eine Anzahl an zusätzlichen Ringspulen (10) verlängert ist, die achtzehn oder ein Vielfaches beträgt, und die Anschlüsse der zusätzlichen Ringspulen (10) nach dem gleichen Schema verbunden sind wie im Mittelteil des Ständers (1) des Linearmotors von Anspruch 1.

3. Zylindrischer Linearmotor nach Anspruch 1 oder 2, wobei der Ständer (1) Einzelbleche (12) aufweist, die radial angeordnet sind.

4. Zylindrischer Linearmotor nach einem der vorhergehenden Ansprüche, wobei der Ständer (1) einen Ständerkern (11) besitzt, der in Umfangsrichtung verlaufende Nuten aufweist, in die die Ringspulen (10) eingelegt sind.

5. Zylindrischer Linearmotor nach Anspruch 3 oder 4, wobei die Einzelbleche (12) des Ständerkerns (11) eine Blechanordnung bilden, die in Umfangsrichtung eine oder mehrere Unterbrechungen aufweist, in die jeweils ein Ständerkammelement (17) eingefügt ist.

6. Zylindrischer Linearmotor nach Anspruch 5, wobei das Ständerkammelement (17) den axial verlaufenden Schaltkanal (19) aufweist.

7. Zylindrischer Linearmotor nach Anspruch 5 oder 6, wobei das Ständerkammelement (17) ein elektrisch isolierendes Kunststoffteil, ein elektrisch isoliertes Gussteil oder ein elektrisch isoliertes Sinterteil aufweist.

8. Zylindrischer Linearmotor nach einem der vorergehenden Ansprüche, wobei die Verbindungen der Anschlüsse (A1L bis A36L, A1R bis A36R) mittels Schneidklemmen oder Lötungen hergestellt sind.

9. Kombinationsantrieb für Dreh- und Hubbewegungen mit einem Drehmotor und einem Linearmotor nach einem der vorhergehenden Ansprüche.

## Claims

1. Cylindrical linear motor having
- a cylindrical rotor (2) that has eight poles, and
- a cylindrical stator (1) that has a winding having 36 coaxial toroidal coils (10) that extend in the circumferential direction, with
- the toroidal coils (10) being of equal size and arranged axially one behind the other,
- all the terminals (A1L to A36L, A1R to A36R) of the toroidal coils (10) being located in an axially extending connector channel (19),
- each toroidal coil (10) having a left-hand terminal (A1L to A36L) and a right-hand terminal (A1R to A36R) in the given top view onto the connector channel (19), resulting in left-hand terminals A1L to A36L and right-hand terminals A1R to A36R for the 36 toroidal coils (10),
- the terminals being connected in pairs as follows:
A1L to A6R
A4L to A9R
A7L to A12R
A10L to A15R
A13L to A18R
A16L to A21R
A19L to A24R
A22L to A27R
A25L to A30R
A28L to A33R
A31L to A36R
A3L to A5L
A6L to A8L
A9L to A11L
A12L to A14L
A15L to A17L
A18L to A20L
A21L to A23L
A24L to A26L
A27L to A29L
A30L to A32L
A33L to A35L
A2R to A4R
A5R to A7R
A8R to A10R
A11R to A13R
A14R to A16R
A17R to A19R
A20R to A22R
A23R to A25R
A26R to A28R
A29R to A31R
A32R to A34R;
- terminals A2L, A1R, and A3R are moreover in each case connected to a phase of a three-phase system, and
- terminals A34L, A36L, and A35R are connected together into a star point.

2. Cylindrical linear motor according to claim 1, with the stator (1) having been extended in its center by a number of additional toroidal coils (10) comprising eighteen or a multiple thereof, and the terminals of the additional toroidal coils (10) being connected according to the same scheme as in the central part of the stator (1) of the linear motor in claim 1.

3. Cylindrical linear motor according to claim 1 or 2, with the stator (1) having individual plates (12) arranged radially.

4. Cylindrical linear motor according to one of the preceding claims, with the stator (1) having a stator core (11) that has slots which extend in the circumferential direction and into which the toroidal coils (10) have been inserted.

5. Cylindrical linear motor according to claim 3 or 4, with the individual plates (12) of the stator core (11) forming a plate arrangement which in the circumferential direction has one or more interruptions into each of which a stator-comb element (17) has been inserted.

6. Cylindrical linear motor according to claim 5, with the stator-comb element (17) having the axially extending connector channel (19).

7. Cylindrical linear motor according to claim 5 or 6, with the stator-comb element (17) having an electrically insulating plastic part, an electrically insulated cast part, or an electrically insulated sintered part.

8. Cylindrical linear motor according to one of the preceding claims, with the connections of the terminals (A1L to A36L, A1R to A36R) having been produced using insulation-displacement connectors or soldered joints.

9. Combination drive for performing turning and stroke motions having a torque motor and a linear motor according to one of the preceding claims.

## Revendications

1. Moteur linéaire cylindrique comprenant
- un rotor ( 2 ) cylindrique qui a huit pôles, et
- un stator ( 1 ) cylindrique qui a un enroulement ayant 36 bobines ( 10 ) annulaires, coaxiales et s'étendant dans la direction périphérique, dans lequel
- les bobines ( 10 ) annulaires sont de même dimension et sont disposées les unes derrière les autres axialement,
- toutes les bornes (A1L à A36L, A1R à A36R) des bobines ( 10 ) annulaires sont disposées dans un canal (19) de commutation s'étendant axialement,
- chaque bobine ( 10 ) annulaire a, dans une vue en plan donnée à l'avance, sur le canal ( 19 ) de commutation respectivement une borne (A1L à A36L) gauche et respectivement une borne (A1R à A36R) droite, de manière à donner pour les 36 bobines ( 10 ) annulaires les bornes (A1L à A36L) gauches et les bornes (A1R à A36R) droites,
- les bornes sont reliées par paire comme suit :
A1L avec A6R
A4L avec A9R
A7L avec A12R
A10L avec A15R
A13L avec A18R
A16L avec A21R
A19L avec A24R
A22L avec A27R
A25L avec A30R
A28L avec A33R
A31L avec A36R
A3L avec A5L
A6L avec A8L
A9L avec A11L
A12L avec A14L
A15L avec A17L
A18L avec A20L
A21L avec A23L
A24L avec A26L
A27L avec A29L
A30L avec A32L
A33L avec A35L
A2R avec A4R
A5R avec A7R
A8R avec A10R
A11R avec A13R
A14R avec A16R
A17R avec A19R
A20R avec A22R
A23R avec A25R
A26R avec A28R
A29R avec A31R
A32R avec A34R
- en outre, les bornes A2L, A1R et A3R sont reliées respectivement à une phase d'un système triphasé, et
- les bornes A34L, A36L et A35R sont interconnectées en un point étoile.

2. Moteur linéaire cylindrique suivant la revendication 1, dans lequel le stator ( 1 ) est prolongé au milieu d'un nombre de bobines ( 10 ) annulaires supplémentaires, qui se monte à 18 où à un multiple de 18 et les bornes des bobines ( 10 ) annulaires supplémentaires sont reliées suivant le même schéma que dans la partie médiane du stator ( 1 ) du moteur linéaire de la revendication 1.

3. Moteur linéaire cylindrique suivant la revendication 1 ou 2, dans lequel le stator a des tôles (12) individuelles qui sont disposées radialement.

4. Moteur linéaire cylindrique suivant l'une des revendications précédentes, dans lequel le stator ( 1 ) a un noyau ( 11 ) qui a des encoches qui s'étendent dans la direction périphérique et dans lesquelles sont insérées les bobines ( 10 ) annulaires.

5. Moteur linéaire cylindrique suivant la revendication 3 ou 4, dans lequel les tôles ( 12 ) individuelles du noyau ( 11 ) du stator forment un agencement de tôle qui a, dans la direction périphérique, une interruption ou plusieurs interruptions dans lesquelles est inséré respectivement un élément (17) de peigne du stator.

6. Moteur linéaire cylindrique suivant la revendication 5, dans lequel l'élément ( 17 ) de peigne du stator a un canal ( 19 ) de commutation s'étendant axialement.

7. Moteur linéaire cylindrique suivant la revendication 5 ou 6, dans lequel l'élément ( 17 ) de peigne du stator a une partie en matière plastique isolante du point de vue électrique, une pièce coulée isolée électriquement ou une pièce frittée isolée électriquement.

8. Moteur linéaire cylindrique suivant l'une des revendications précédentes, dans lequel les liaisons des bornes (A1L à A36L, A1R à A36R) sont réalisées au moyen de bornes autodénudantes ou de brasures.

9. Entraînement en combinaison pour des mouvements de rotation et de soulèvement, ayant un moteur rotatif et un moteur linaire suivant l'une des revendications précédentes.
